(19) Europäisches Patentamt

European Patent Office

Office européen des brevets

(11) **EP 1 689 018 A1**

(12) **EUROPEAN PATENT APPLICATION**
published in accordance with Art. 158(3) EPC

(43) Date of publication:
**09.08.2006 Bulletin 2006/32**

(51) Int Cl.:
***H01M 14/00*** *(2006.01)*     ***H01L 31/04*** *(2006.01)*

(21) Application number: **04819284.3**

(22) Date of filing: **04.11.2004**

(86) International application number:
**PCT/JP2004/016317**

(87) International publication number:
**WO 2005/053082 (09.06.2005 Gazette 2005/23)**

(84) Designated Contracting States:
**DE ES FR IT NL**

(30) Priority: **28.11.2003 JP 2003400487**

(71) Applicant: **NGK Spark Plug Co., Ltd.**
**Nagoya-shi,**
**Aichi 467-8525 (JP)**

(72) Inventors:
• **GONDA, Ichiro C/O NGK SPARK PLUG CO. LTD**
**Aichi 467-8525 (JP)**

• **OKUYAMA, YasuoC/O NGK SPARK PLUG CO.**
**LTD**
**Aichi 467-8525 (JP)**

(74) Representative: **Grünecker, Kinkeldey,**
**Stockmair & Schwanhäusser**
**Anwaltssozietät**
**Maximilianstrasse 58**
**D-80538 München (DE)**

(54) **DYE-SENSITIZED SOLAR CELL**

(57)     According to an aspect of the present invention, there is provided a dye-sensitized solar cell including a first base member having a first light-transmitting substrate, a light-transmitting conductive layer formed on a surface of the first substrate, a first semiconductor electrode containing a sensitizing dye and arranged on a surface of the conductive layer, a second semiconductor electrode containing a sensitizing dye and arranged with a first surface thereof facing the first semiconductor electrode, a first collector electrode formed on a second surface of the second semiconductor electrode and an electrolyte layer arranged between the first and second semiconductor electrodes, a porous insulating layer arranged in contact with the second semiconductor electrode and the first collector electrode or with the first collector electrode, and a second base member having a second substrate and a catalyst layer formed on a surface of the second substrate and facing the porous insulating layer. With such two semiconductor electrodes provided in the dye-sensitized solar cell, it is possible to allow highly efficient utilization of irradiation light and thereby obtain improved photoelectric conversion efficiency.

**FIG.5**

EP 1 689 018 A1

**Description**

Technical Field

The present invention relates to a dye-sensitized solar cell for directly converting light energy into electrical energy, in particular, of the type having two semiconductor electrodes for improved light utilization efficiency.

Background Art

Solar cells utilizing single-crystal silicon, polycrystalline silicon, amorphous silicon, HIT (Heterojunction with Intrinsic Thin-layer) formed by varying combinations thereof have currently been put to practical use and become major techniques in solar power generation technology. These silicon solar cells show excellent photoelectric conversion efficiency of nearly 20%, but require high energy costs for material processing and have many problems to be addressed such as environmental burdens and cost and material supply limitations. On the other hand, dye-sensitized solar cells have been proposed by Gratzel et al. in Japanese Laid-Open Patent Publication No. Hei-01-220380 and Nature (vol. 353, pp.737-740, 1991) and come to attention as low-priced solar cells. These dye-sensitized solar cells are each provided with porous titania electrodes supporting thereon sensitizing dyes, counter electrodes and electrolytic materials interposed between the titania electrodes and the counter electrodes so as to allow significant reductions in material and processing cost although being lower in photoelectric conversion efficiency than the silicon solar cells.

The photoelectric conversion efficiency of the dye-sensitized solar cells can be improved through efficient light irradiation utilization. For improvements in light utilization efficiency, it is conceivable to use sensitizing dyes having wide light absorption wavelength ranges. The developments of such sensitizing dyes have been attempted as disclosed in Japanese Laid-Open Patent Publication No. Hei-10-93118.

However, it is not easy to develop a sensitizing dye capable of not only absorbing a sufficiently wide wavelength range of light but also securing practical durability. Further improvements and developments in sensitizing dyes are required.

Disclosure of the Invention

The present invention has been made according to the above circumstances to provide a dye-sensitized solar cell having two semiconductor electrodes for improved light utilization efficiency, and more specifically, of the type capable of achieving a further improvement in light utilization efficiency through the use of sensitizing dyes having different light absorption wavelength ranges in two semiconductor electrodes.

According to an aspect of the present invention, there is provided a dye-sensitized solar cell, comprising: a first base member including a first substrate having a light-transmitting property, a light-transmitting conductive layer formed on a surface of the first substrate, a first semiconductor electrode containing a sensitizing dye and arranged on a surface of the light-transmitting conductive layer, a second semiconductor electrode containing a sensitizing dye and arranged with a first surface thereof facing the first semiconductor electrode, a first collector electrode formed on a second surface of the second semiconductor electrode and an electrolyte layer arranged between the first and second semiconductor electrodes; a porous insulating layer arranged in contact with the second semiconductor electrode and the first collector electrode or in contact with the first collector electrode; and a second base member including a second substrate and a catalyst layer formed on a surface of the second substrate and facing the porous insulating layer.

Brief Description of Drawings

FIG. 1 is a sectional view of a dye-sensitized solar cell according to a first embodiment of the present invention.
FIG. 2 is a schematic view showing comparison between the amounts of light absorbed by sensitizing dyes of first and second semiconductor electrodes, relative to the wavelength, in the solar cell.
FIG. 3 is a partially enlarged schematic view of a light-transmitting conductive layer, a first semiconductor electrode and an electrolyte layer of the dye-sensitized solar cell according to the first embodiment of the present invention.
FIG. 4 is a partially enlarged schematic view of an electrolyte layer, a second semiconductor electrode and a first collector electrode of the dye-sensitized solar cell according to the first embodiment of the present invention.
FIG. 5 is a sectional view of a dye-sensitized solar cell according to a second embodiment of the present invention.
FIG. 6 is a sectional view of a dye-sensitized solar cell according to a third embodiment of the present invention.
FIG. 7 is a sectional view of a dye-sensitized solar cell according to a fourth embodiment of the present invention.
FIG. 8 is a sectional view of a dye-sensitized solar cell according to a fifth embodiment of the present invention.

FIG. 9 is a sectional view of a dye-sensitized solar cell according to a sixth embodiment of the present invention.
FIG. 10 is a schematic view showing one example of grid electrode pattern of semiconductor electrode arrangement.
FIG. 11 is a schematic view showing one example of comb electrode pattern of semiconductor electrode arrangement.
FIG. 12 is a schematic view showing one example of radial electrode pattern of semiconductor electrode arrangement.
FIG. 13 is a schematic view showing one example of grid electrode pattern of collector electrode arrangement.
FIG. 14 is a schematic view showing one example of comb electrode pattern of collector electrode arrangement.
FIG. 15 is a schematic view showing one example of radial electrode pattern of collector electrode arrangement.

Best Mode for Carrying Out the Invention

Hereinafter, exemplary embodiments of the present invention will be described below in detail with reference to the drawings. It should be noted that like parts and portions are designated by like reference numerals in the following description to omit repeated explanations thereof.

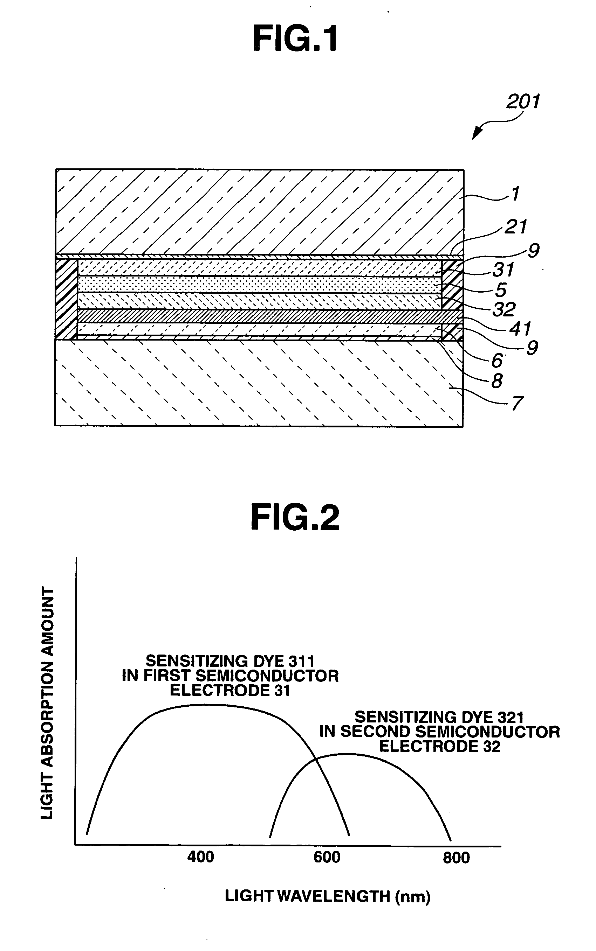

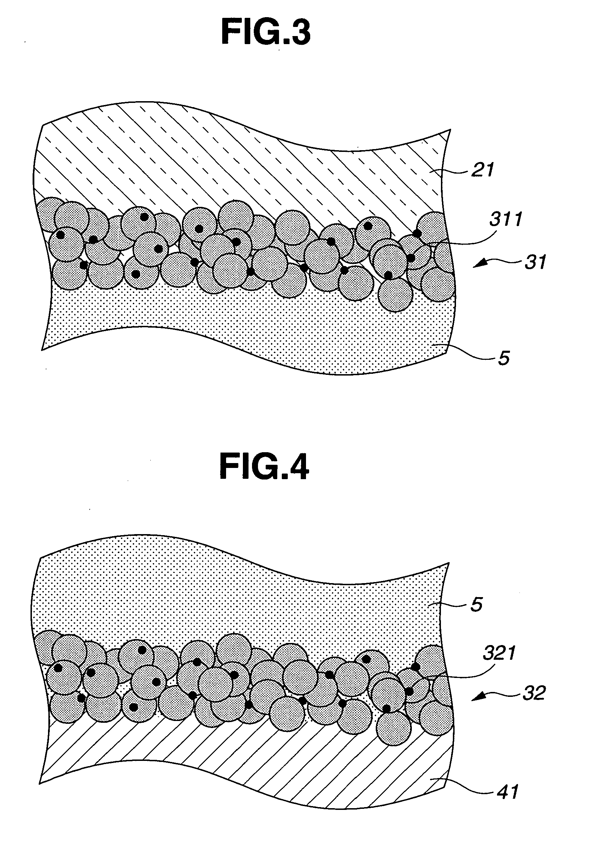

Each of dye-sensitized solar cells 201 to 206 according to first to sixth embodiments of the present invention includes a first base member 101, a porous insulating layer 6 and a second base member 102 as shown in FIGS. 1, 5, 6, 7, 8 and 9. The first base member 101 has a light-transmitting substrate 1, a light-transmitting conductive layer 21 formed on a surface of the light-transmitting substrate 1, a first semiconductor electrode 31 arranged on a surface of the light-transmitting conductive layer 21 and containing therein a sensitizing dye 311 (cf. FIG. 3), a second semic25.8onductor electrode 32 arranged with a first surface thereof facing the first semiconductor electrode 31 and containing therein a sensitizing dye 321 (cf. FIG. 4), a first collector electrode 41 formed on a second surface of the second semiconductor electrode 32 and an electrolyte layer 5 formed between the first semiconductor electrode 31 and the second semiconductor electrode 32. Among these component parts of the first base member 101, the first collector electrode 41 may or may not have a light-transmitting property since there is no need for the first collector electrode 41 to allow light transmission to the porous insulating layer 6 and the second base member 102. The second base member 102 has a substrate 7 and a catalyst layer 8 formed on a surface of the substrate 7. The second base member 102 as a whole may or may not show a light-transmitting property. Namely, each of the substrate 7 and the catalyst layer 8 may or may not have a light-transmitting property.

Herein, the light-transmitting property means that the transmissivity of visible light having a wavelength of 400 to 900 nm as expressed by the following equation is 10% or higher. The light transmissivity is desirably in a range of 60% or higher, more preferably 85% or higher. The meaning of the light-transmitting property and the desirable range of the light transmissivity are hereinafter the same throughout the description.

$$\text{Transmissivity (\%)} = (\text{the amount of transmitted light} \, / \, \text{the amount of incident light}) \times 100$$

As the light-transmitting substrate 1, there may be used a substrate of glass, resin sheet or the like. The resin sheet is not particularly restricted. Examples of the resin sheet include sheets of polyesters such as polyethylene terephthalates and polyethylene naphthalates and other sheets of polyphenylene sulfides, polycarbonates, polysulfones and polyethylidene norbornenes.

The light-transmitting substrate 1 varies in thickness depending on the material thereof. The thickness of the light-transmitting substrate 1 is not particularly restricted but is desirably of such a thickness that the above-defined transmissivity ranges from 60 to 99%, especially from 85 to 99%.

The light-transmitting conductive layer 21 is not particularly restricted as long as it has light-transmitting and conducting properties. As the light-transmitting conductive layer 21, there may be used a thin film of conductive oxide, metal, carbon or the like. Examples of the conductive oxide include tin oxide, fluorine-doped tin oxide (FTO), indium oxide, tin-doped indium oxide (ITO) and zinc oxide. Examples of the metal include platinum, gold, copper, aluminum, rhodium and indium.

The light-transmitting conductive layer 21 varies in thickness depending on the material thereof. The thickness of the light-transmitting conductive layer 21 is not particularly restricted but is desirably of such a thickness that the layer 21 shows a surface resistivity of 100 $\Omega/cm^2$ or lower, especially 1 to 10 $\Omega/cm^2$.

The preparation method of the light-transmitting conductive layer 21 is not particularly restricted. The light-transmitting conductive layer 21 can be prepared, for example, through the application of a paste containing fine particles of metal, conductive oxide or the like to the surface of the light-transmitting substrate 1. The paste application process is exemplified by various process techniques such as a doctor blade process, a squeegee process and a spin coat process. Alternatively, the light-transmitting conductive layer 21 may be prepared by a sputtering, vapor deposition or ion plating process using a metal or conductive oxide material.

As the sensitizing dyes 311 and 321, there may be used complex dyes and organic dyes for improved photoelectric conversion. Examples of the complex dyes are metal complex dyes. Examples of the organic dyes are polymethine dyes and merocyanine dyes. Specific examples of the metal complex dyes include ruthenium complex dyes and osmium complex dyes. Among others, especially preferred are ruthenium complex dyes. In order to secure a wider wavelength range of photoelectric conversion for improved photoelectric conversion efficiency, two or more kinds of sensitizing dye compounds having different sensitizing wavelength ranges can be used in combination. In this case, it is desirable to select the kinds and quantity ratio of the sensitizing dyes 311 and 321 according to the wavelength range and intensity distribution of irradiation light. Further, the sensitizing dyes 311 and 321 preferably include functional groups for bonding to the respective semiconductor electrodes 31 and 32. Examples of the functional groups are carboxyl groups, sulfonic groups and cyano groups.

The sensitizing dyes 311 and 321 may be the same. Even when the light absorption wavelength ranges of the first and second semiconductor electrodes 31 and 32 are the same, it is possible by providing two such semiconductor electrodes to achieve highly efficient utilization of the irradiation light for improved photoelectric conversion efficiency.

In the case where sensitizing dyes 311 and 322 have different light absorption wavelength ranges as shown in FIG 2, it is possible to achieve more highly efficient utilization of the irradiation light for further improved photoelectric conversion efficiency. The light absorption wavelength ranges of the sensitizing dyes 311 and 322 are thus preferably different from each other. Although the combination of the sensitizing dyes 311 and 321 having different absorption wavelength ranges is not particularly restricted, it is desirable to secure a greater difference between the absorption wavelengths of the sensitizing dyes 311 and 321 for higher light utilization efficiency.

In the case where the light absorption wavelength ranges of the sensitizing dyes 311 and 321 are different from each other, it is further desirable that the light absorption wavelength range of the sensitizing dye 311 of the first semiconductor electrode 31, which is located near the light-transmitting substrate 1, be on a shorter wavelength side of the light absorption wavelength range of the sensitizing dye 321 of the second semiconductor electrode 32. This allows a larger amount of light to pass through the first semiconductor electrode 31 and reach the second semiconductor electrode 32 so as to obtain a further improvement in light utilization efficiency.

In addition, at least one of the sensitizing dye 311 and the sensitizing dye 321 is preferably composed of two or more different kinds of sensitizing dye compounds having different light absorption wavelength ranges. More preferably, all the sensitizing dye compounds of the sensitizing dyes 311 and 321 have different light absorption wavelength ranges from one another. When the light absorption wavelength ranges of all the sensitizing dye compounds are different from one another, it is possible to secure a wider wavelength range of light absorbed by the sensitizing dyes 311 and 321 and show a particularly large improvement in light utilization efficiency.

Each of the electrode bodies of the semiconductor electrodes 31 and 32 can be made of a metal oxide material, a metal sulfide material or the like. Examples of the metal oxide material include titania, tin oxide, zinc oxide, niobium oxide such as niobium pentoxide, tantalum oxide and zirconia. As the metal oxide material, there may also be used double oxide such as strontium titanate, calcium titanate and barium titanate. Examples of the metal sulfide material include zinc sulfide, lead sulfide and bismuth sulfide.

The preparation method of the electrode body is not particularly restricted. In the case of the first semiconductor electrode 31, the electrode body can be prepared by, for example, applying a slurry containing fine particles of metal oxide, metal sulfide or the like to the surface of the light-transmitting conductive layer 21 and sintering the paste. In the case of the second semiconductor electrode 32, the electrode body can be similarly prepared by applying a slurry containing fine particles of metal oxide, metal sulfide or the like to the surfaces of the porous insulating layer 6 and the first collector electrode 41, or to the surface of the first collector electrode 41, and then, sintering the paste. The slurry application process is not also particularly restricted. The slurry application process is exemplified by a screen printing process, a doctor blade process, a squeegee process, a spin coat process and the like. The thus-prepared electrode body is in the form of an agglomerate in which the fine particles are agglomerated. Alternatively, the electrode body may be prepared by applying a colloid in which fine particles of metal oxide, metal sulfide or the like are dispersed together with a small quantity of organic polymer to, in the case of the first semiconductor electrode 31, the surface of the light-transmitting conductive layer 21 of the first base member 101 and to either the surfaces of the porous insulating layer 6 and the first collector electrode 41 or the surface of the first collector electrode 41 in the case of the second semiconductor electrode 32, drying the colloid, and then, removing the organic polymer by heat decomposition. The colloid application process is exemplified by various process techniques such as a screen printing process, a doctor blade process, a squeegee process and a spin coat process. The thus-prepared electrode body is also in the form of an agglomerate in which the fine particles are agglomerated.

In this way, each of the electrode bodies of the semiconductor electrodes 31 and 32 is generally provided in fine particle agglomerate form. The average fine particle diameter of the electrode body, when measured by X-ray diffraction, is not particularly restricted but is desirably in a range of 5 to 100 nm, especially 10 to 50 nm. Further, the average particle size of the electrode body of the first semiconductor electrode 31 is preferably smaller than that of the second semiconductor electrode 32. This allows a larger amount of light to pass through the first semiconductor electrode 31 on the light incident side so as to obtain an improvement in light utilization efficiency. Although there is no particular restriction on the difference between the average particle diameters of the electrode bodies of the first and second semiconductor electrodes 31 and 32, the difference between the average particle diameters of the electrode bodies of the first and second semiconductor electrodes 31 and 32 is preferably in a range of 5 to 60 nm, especially 10 to 50 nm. Especially when the average particle diameter of the electrode body of the first semiconductor electrode 31 ranges from 10 to 20 $\mu$m and the average particle diameter of the electrode body of the second semiconductor electrode 32 ranges from 30 to 50 $\mu$m, the amount of light passing through the first semiconductor electrode 31 and reaching the second semiconductor electrode 32 can be increased to a sufficient degree so as to obtain a further improvement in light utilization efficiency.

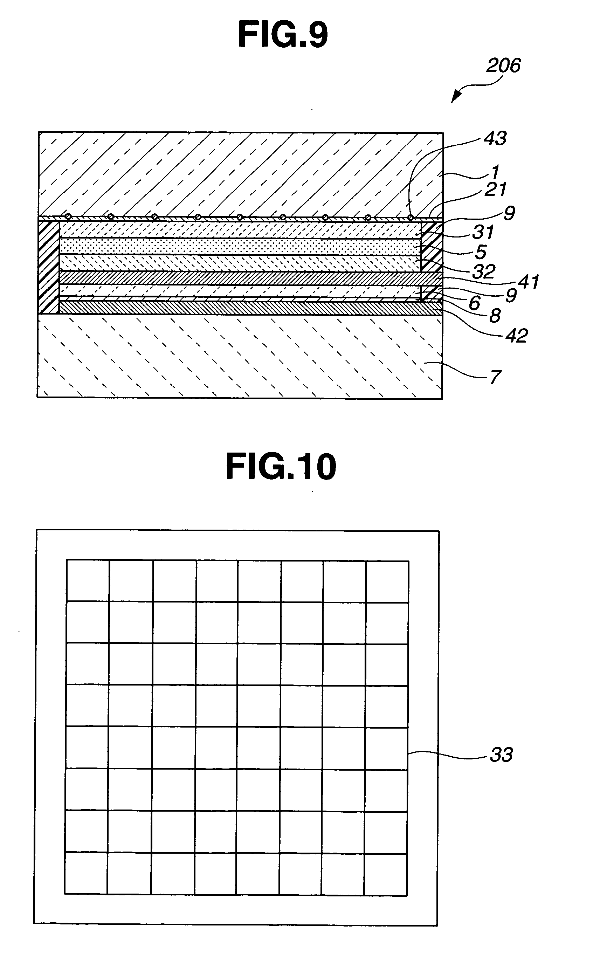

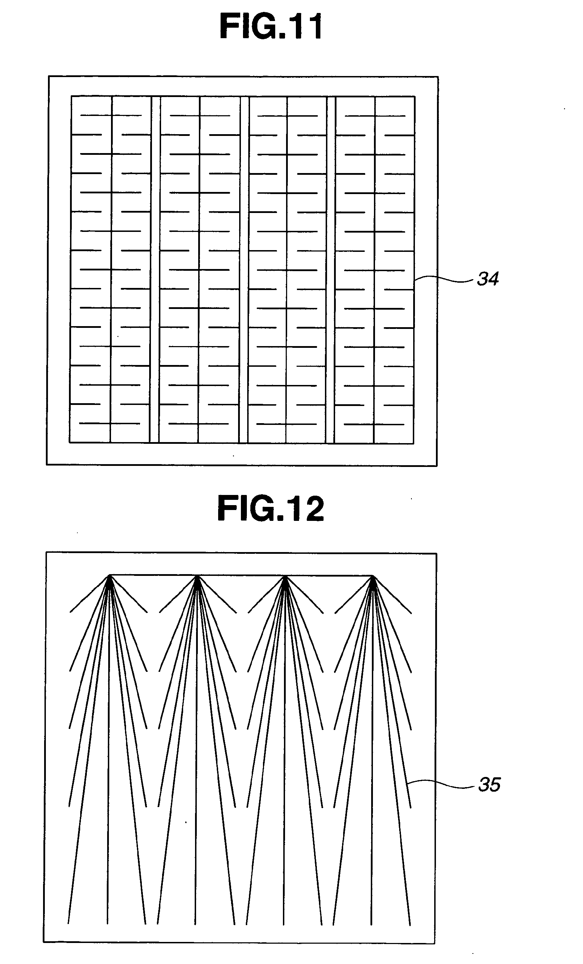

The forms of the first and second semiconductor electrodes 31 and 32 are not particularly restricted. Each of the semiconductor electrodes 31 and 32 can be a sheet electrode or a linear electrode having a specific electrode pattern. The first semiconductor electrode 31 is generally provided in sheet form and arranged on a surface portion of the light-transmitting conductive layer 21 other than the edge on which a joint is to be formed. On the other hand, the second semiconductor electrode 32 is preferably formed into a linear electrode with a specific electrode pattern. The semiconductor electrode pattern is not particularly restricted. Examples of the electrode pattern are a grid pattern 33 as shown in FIG. 10, a comb pattern 34 as shown in FIG. 11 and a radial pattern 35 as shown in FIG. 12. In the case where the second semiconductor electrode 32 is of the linear electrode with such a specific pattern, the width and thickness of the linear electrode are not particularly restricted and can be selected in view of the photoelectric conversion efficiency, cost and the like. It is possible to allow an electrolyte material and the like to migrate through the second semiconductor electrode 32 to the catalyst layer 8 when the second semiconductor electrode 32 is formed of the linear electrode in the specific pattern.

In the case where the first and second semiconductor electrodes 31 and 32 are provided in sheet form, the thickness of each semiconductor electrode 31, 32 is not particularly restricted and can be adjusted to 0.1 to 100 $\mu$m. The thickness of the semiconductor electrode 31, 32 desirably ranges from 1 to 50 $\mu$m, especially 2 to 40 $\mu$m, more especially 5 to 30 $\mu$m. When the thickness of each semiconductor electrode 31, 32 is in the range of 0.1 to 100 $\mu$m, it is possible to achieve adequate photoelectric conversion for improved photoelectric conversion efficiency. It is in particular desirable to control the thickness of the first semiconductor electrode 31 to 0.1 to 25 $\mu$m, especially 0.5 to 20 $\mu$m, more especially 1 to 15 $\mu$m, control the thickness of the second semiconductor electrode 32 to 5 to 100 $\mu$m, especially 10 to 50 $\mu$m, more especially 15 to 30 $\mu$m, and, at the same time, form the first semiconductor electrode 31 into a thinner layer than the second semiconductor electrode 32. The amount of light passing through the first semiconductor electrode 31 and reaching the second semiconductor electrode 32 can be increased to a sufficient degree, by controlling each electrode thickness in this way, so as to obtain a further improvement in light utilization efficiency.

In order to increase the strengths of the first and second semiconductor electrodes 31 and 32, the adhesion of the first semiconductor electrode 31 with the light-transmitting conductive layer 21 and the adhesion of the second semiconductor electrode 32 with the porous insulating layer 6 and the first collector electrode 41, the first and second semiconductor electrodes 31 and 32 are desirably subjected to heat treatment. The temperature and time of the heat treatment are not particularly restricted. It is desirable to control the heat treatment temperature to within 40 to 700°C, especially 100 to 500°C, and to control the heat treatment time to within 10 minutes to 10 hours, especially 20 minutes to 5 hours. In the case of using a resin sheet as the light-transmitting substrate 1 on the side of the first semiconductor electrode 31, the heat treatment is desirably performed at low temperatures so as not to cause a thermal degradation of the resin sheet.

The method of adhering the sensitizing dye 311, 321 to the electrode body is not particularly restricted. The sensitizing dye 311, 321 can be adhered to the electrode body by, for example, immersing the electrode body into a solution in which the sensitizing dye 311, 321 is dissolved with an organic solvent, impregnating the electrode body with the solution, and then, removing the organic solvent. Alternatively, the sensitizing dye 311, 321 may be adhered to the electrode body by applying a solution in which the sensitizing dye 311, 321 is dissolved with an organic solvent to the electrode body, and then, removing the organic solvent. The solution application process is exemplified by a wire bar process, a slide hopper process, an extrusion process, a curtain coating process, a spin coat process, a spray coat process and the like. The solution may alternatively be applied by a printing process such as an offset printing process, a gravure printing process or a screen printing process.

The adhesion amount of the sensitizing dye 311, 321 desirably ranges from 0.01 to 1 mmol, especially 0.5 to 1 mmol, per 1g of the electrode body of the semiconductor electrode 31, 32. When the adhesion amount of the sensitizing dye 311, 321 is in the range of 0.01 to 1 mmol, the photoelectric conversion can be made efficiently in the semiconductor electrode 31, 32. Although it is satisfactory to adhere the sensitizing dye 311, 321 to at least a surface of the electrode body, the sensitizing dye 311, 321 is desirably adhered and incorporated into a portion of the electrode body located within 90% of the distance from the electrode surface and is generally adhered and incorporated throughout the electrode body. This allows a further improvement in photoelectric conversion efficiency. The photoelectric conversion efficiency of the semiconductor electrode 31, 32 may be lowered if some of the sensitizing dye 311, 321 exists free around the electrode 31, 32 without being adhered to the electrode body. It is thus desirable to remove an excessive amount of sensitizing dye 311, 321 by washing the semiconductor electrode 31, 32 after the process of adhering the sensitizing dye 311, 321. The removal can be done by washing with an organic solvent such as a polar solvent e.g. acetonitrile or an alcohol solvent through the use of a washing bath. In order to adhere a large amount of sensitizing dye 311, 322 to the electrode body, the electrode body is desirably subjected to heating before the impregnation or application process. In this case, it is further preferred that the impregnation or application process is performed at temperatures of 40 to 80°C immediately after the heat treatment and before the electrode body reaches an ambient temperature so as to avoid water from being adsorbed onto the surface of the electrode body.

The first collector electrode 41 is arranged on the second surface of the second semiconductor electrode 32.

The form of the first collector electrode 41 is not particularly restricted. The first collector electrode 41 can be provided in sheet form as shown in FIG. 1. It is herein required that the electrolyte material be distributed between the second semiconductor electrode 32 and the catalyst layer 8. The first collector electrode 41 is thus desirably in the form of a porous medium in the case where the first collector electrode 41 is in sheet form, especially when having an area larger than or equal to 10% or more, especially 30% or more, of the area of the second semiconductor electrode 32. The first collector electrode 41 may be arranged in contact with the whole of the second surface of the second semiconductor electrode 3. In this case, the first collector electrode 41 needs to be porous so as to incorporate and migrate therein the electrolyte material. The porosity of such a porous electrode medium, when determined as the ratio of the pore area to the total area in a field of view by observing a cross sectional surface of the porous medium with an electron microscope, is not particularly restricted and is desirably controlled to 2 to 40%, especially 10 to 30%, more especially 15 to 25%. When the electrode porosity is in the range of 2 to 40%, especially 10 to 30%, the first collector electrode 41 is able to incorporate therein a required amount of electrolyte material and allow the electrolyte material to migrate therethrough adequately. The first collector electrode 41 of such porous medium can be prepared by sintering a film of metallized ink containing a metal component such as tungsten, titanium or nickel, a pore forming oxide such as alumina and the like.

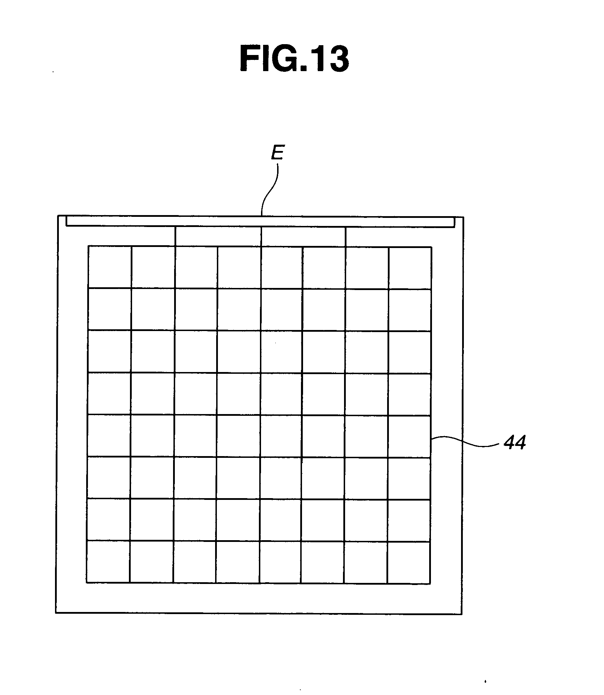

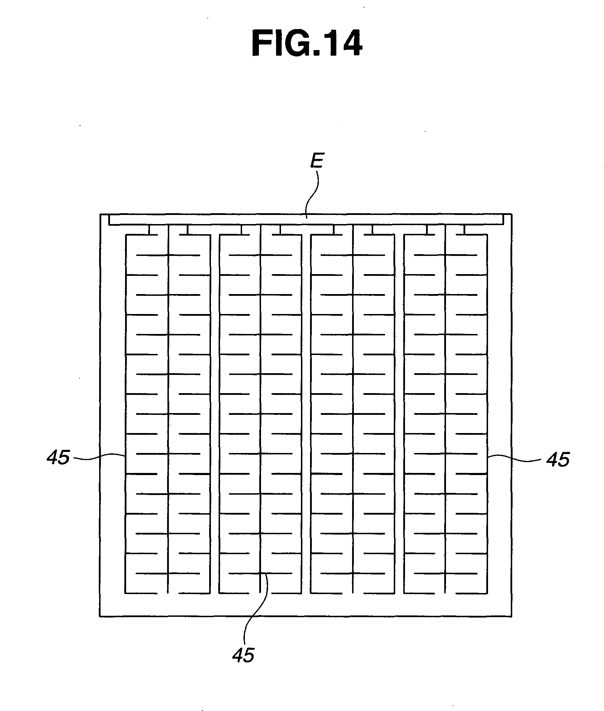

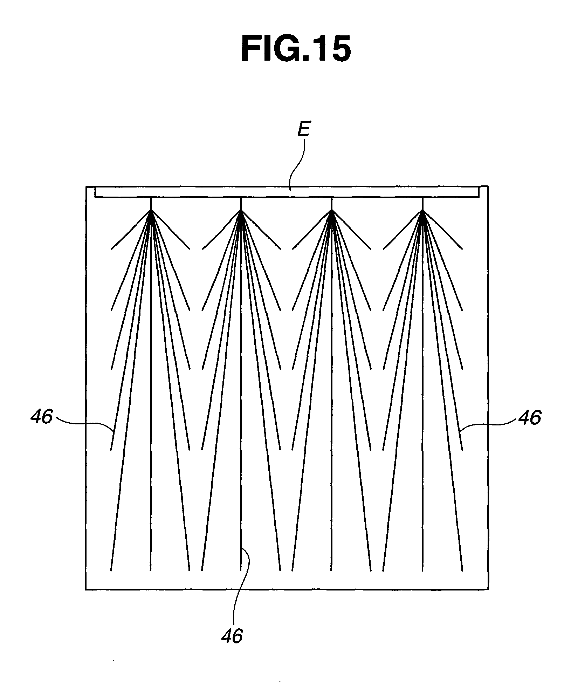

Alternatively, the first collector electrode 41 may be provided in the form of a linear electrode having a specific electrode pattern. The collector electrode pattern is not particularly restricted. Examples of the collector electrode pattern are a grid pattern 44 as shown in FIG. 13, a comb pattern 45 as shown in FIG. 14 and a radial pattern 46 as shown in FIG. 15. In the case where the first collector electrode 41 is of the linear electrode with such a specific pattern, the width and thickness of the linear electrode are not particularly restricted and can be selected in view of the electric resistance, cost and the like. The total area of the first collector electrode 41 is preferably in a range of 1 to 90%, especially 5 to 50%, more especially 10 to 20%, relative to the total area of the second semiconductor electrode 32 when the first collector electrode 41 is provided in the specific pattern e.g. grid pattern, comb pattern or radial pattern. When the total area of the first collector electrode 41 is in the range of 1 to 90%, especially 5 to 50%, of the total area of the second semiconductor electrode 32, it is possible to hold the electrolyte material adequately in a portion where the first collector electrode 41 is not arranged and allow the electrolyte material to migrate easily.

The electrolyte layer 5 can be formed of an electrolyte solution. The electrolyte solution generally contains a solvent and various additives in addition to the electrolyte material. Examples of the electrolyte material include: (1) $I_2$ and an iodide; (2) $Br_2$ and a bromide; (3) a metal complex such as a ferrocyanide-ferricyanide complex or a ferrocene-ferricinium ion complex; (4) a sulfur compound such as sodium polysulfide or alkylthiol-alkyldisulfide; (5) a viologen dye; and (6) hydroquinone-quinone. As the iodide of the electrolyte material (1), there can be used metal iodides such as LiI, NaI, KI, CsI and $CaI_2$, quaternary ammonium iodides such as tetraalkylammonium iodide, pyridinium iodide and imidazolium iodide and the like. As the bromide of the electrolyte material (2), there can be used metal bromides such as LiBr, NaBr, KBr, CsBr and $CaBr_2$, quaternary ammonium bromides such as a tetraalkylammonium bromide and pyridinium bromide and the like. Among these electrolyte materials, especially preferred is a combination of $I_2$ and LiI or the quaternary ammonium iodide such as pyridinium iodide or imidazolium iodide. These electrolyte materials may be used solely or in combination thereof.

The solvent of the electrolyte layer 5 is preferably a solvent having low viscosity, high ionic mobility and sufficient ionic conductance. Examples of such a solvent include: (1) carbonates such as ethylene carbonate and propylene carbonate; (2) heterocyclic compounds such as 3-methyl-2-oxazolidinone; (3) ethers such as dioxane and diethyl ether; (4) chain ethers such as ethylene glycol dialkylethers, propylene glycol dialkylethers, polyethylene glycol dialkylethers and polypropylene glycol dialkylethers; (5) monoalcohols such as methanol, ethanol, ethylene glycol monoalkylethers, propylene glycol monoalkylethers, polyethylene glycol monoalkylethers and polypropylene glycol monoalkylethers; (6) polyalcohols such as ethylene glycol, propylene glycol, polyethylene glycol, polypropylene glycol and glycerin; (7) nitriles such as acetonitrile, glutarodinitrile, methoxyacetonitrile, propionitrile and benzonitrile; and (8) aprotic polar solvents such as dimethylsulfoxide and sulfolane.

The thickness of the electrolyte layer 5 is not particularly restricted and can be adjusted to 100 $\mu$m or smaller, especially 20 $\mu$m or smaller. When the thickness of the electrolyte layer 5 is in the range of 100 $\mu$m or smaller, especially 20 $\mu$m or smaller, it is possible to secure sufficiently high photoelectric conversion efficiency. Further, the first and second semiconductor electrodes 31 and 32 can be brought into contact with each other. In this case, the photoelectric conversion efficiency can be increased to a sufficiently high level when the thickness of the gap formed therebetween is 20 $\mu$m or smaller (usually 1 $\mu$m or larger).

The electrolyte layer 5 is arranged between the first and second semiconductor electrodes 31 and 32, and there is no particular restriction on the preparation method of the electrode layer 5. The electrolyte layer 5 can be prepared by, for example, providing a seal of resin or glass in a space around the first and second semiconductor electrodes 31 and 32 and between the light-transmitting substrate 1 and the substrate 7 or between the light-transmitting conductive layer 21 and the substrate 7 or, if a conductive layer 22 is provided on the side of the substrate 7 as described later, between the light-transmitting substrate 1 and the substrate 7, between the light-transmitting conductive layer 21 and the substrate 7, between the light-transmitting substrate 1 and the conductive layer 22 or between the light-transmitting conductive layer 21 and the conductive layer 22, and then, injecting the electrolytic solution into the thus-sealed space. The electrolytic solution may be injected into the sealed space either from the side of the light-transmitting substrate 1 or from the side of the substrate 7. It is however desirable to form an injection hole in the side of the light-transmitting substrate 1 where there is a smaller number of component parts to be perforated. Although one injection hole is adequate to inject the electrolytic solution, another hole could conceivably be formed for air vent. The formation of such an air vent hole allows easier injection of the electrolytic solution. Examples of the resin used for the sealing around the first and second semiconductor electrodes 31 and 32 include thermosetting resins such as epoxy resins, urethane resins, polyimide resins and thermosetting polyester resins. The seal can alternatively be provided by the glass. It is desirable to seal with the glass especially when the solar cells 201 to 206 require long-term durability.

The electrolyte layer 5 may alternatively be formed of an ionic liquid of nonvolatile imidazolium salt, a gelated product thereof or a solid such as copper iodide or copper thiocyanate. The thickness of such an electrolyte layer 5 is not particularly restricted and can be controlled to 100 $\mu$m or smaller, especially 20 $\mu$m or smaller (normally 1 $\mu$m or larger) as in the case of using the electrolyte solution. When the upper limit of the electrolyte layer thickness is smaller than or equal to the above-specified value in either case, it is possible to obtain a sufficiently high conversion efficiency.

The porous insulating layer 6 is arranged in contact with the second semiconductor electrode 32 and the first collector electrode 41 or in contact with the first collector electrode 41. Although the material of the porous insulating layer 6 is not particularly restricted, the porous insulating layer 6 is preferably formed of ceramic. The ceramic is not particularly restricted. Various ceramic materials such as oxide ceramic, nitride ceramic and carbide ceramic are usable. Examples of the oxide ceramic are alumina, mullite and zirconia. Examples of the nitride ceramic are silicon nitride, sialon, titanium nitride and aluminum nitride. Examples of the carbide ceramic are silicon carbide, titanium carbide and aluminum carbide. Among others, alumina, silicon nitride and zirconia are preferred. Especially preferred is alumina.

The porosity of the porous insulating layer 6 is not particularly restricted. It is desirable that the porosity of the porous insulating layer 6, when determined as the ratio of the pore area to the total area in a field of view by observing a cross sectional surface of the porous insulating layer 6 with an electron microscope, be in a range from 2 to 40%, especially 10 to 30%, more especially 15 to 25%. When the porosity of the porous insulating layer 6 ranges from 2 to 40%, especially 10 to 30%, the electrolyte material can be easily included and migrated in the porous insulating layer 6 without impairment of the photoelectric conversion effect.

The thickness of the porous insulating layer 6 is not particularly restricted and can be adjusted to 0.5 to 20 $\mu$m, especially 1 to 10 $\mu$m, more especially 2 to 7 $\mu$m. When the thickness of the porous insulting layer 6 is in the range of 0.5 $\mu$m or larger, it is possible to establish electrical insulation between the semiconductor electrode 32 and the catalyst layer 8.

The porous insulating layer 6 can be prepared through the deposition of a ceramic material e.g. alumina, silicon nitride or zirconia onto the surface of the catalyst layer 8 by a physical vapor deposition process such as magnetron sputtering or electron-beam vapor deposition. Alternatively, the porous insulating layer 6 may be prepared by applying a coating of slurry containing a ceramic component, a sintering aid, an organic binder and the like to the surface of the catalyst layer 8 by a screen printing process, and then, sintering the slurry under such conditions that the sinter becomes porous. The porous insulating layer 6 may be prepared by applying a coating of paste containing a ceramic component, a sintering aid, an organic binder and a pore-forming oxide material such as carbon to the surface of the catalyst layer 8 by a screen printing process or the like, and then, sintering the paste at a predetermined temperature for a required time.

The substrate 7 may or may not have a light-transmitting property.

As the substrate 7 having a light-transmitting property, a sheet of glass, resin sheet or the like can be used as in the case of the light-transmitting substrate 1. When the substrate 7 is of the resin sheet, there may be used a thermosetting resin such as polyester, polyphenylene sulfide, polycarbonate, polysulfone or polyethylidene norbornene as the material of the resin sheet. Further, the substrate 7 varies in thickness depending on the material thereof in the case of the substrate 7 having a light-transmitting property. The thickness of the substrate 7 is not particularly restricted and is desirably of such a thickness that the above-defined transmissivity ranges from 60 to 99%, especially from 85 to 99%.

In the case of the substrate 7 having no light-transmitting property, the substrate 7 can be formed of ceramic.

The substrate 7, when made of ceramic, is so high in strength as to function as a supporting substrate and provide each of the dye-sensitized solar cells 201 to 206 with excellent durability. A ceramic material for the ceramic substrate 7 is not particularly restricted. Various ceramic materials such as oxide ceramic, nitride ceramic and carbide ceramic are usable. Examples of the oxide ceramic are alumina, mullite and zirconia. Examples of the nitride ceramic are silicon nitride, sialon, titanium nitride and aluminum nitride. Examples of the carbide ceramic include silicon carbide, titanium carbide and aluminum carbide. As the ceramic material, alumina, silicon nitride and zirconia are preferred. Especially preferred is alumina.

The thickness of the substrate 7 is not particularly restricted and can be adjusted to 100 $\mu$m to 5 mm, especially 500 $\mu$m to 5 mm, more especially 800 $\mu$m to 5 mm, or 500 $\mu$m to 2 mm, in the case of the substrate 7 being made of ceramic. When the ceramic substrate thickness is in the range of 100 $\mu$m to 5 mm, especially 800 $\mu$m to 5 mm, the substrate 7 becomes able to attain high strength and function as a supporting substrate to provide each of the dye-sensitized solar cells 201 to 206 with excellent durability.

The catalyst layer 8 can be made of either a catalytically active material or at least one of metals and conductive oxides and resins containing therein a catalytically active material. Examples of the catalytically active material include noble metals such as platinum, gold and rhodium and carbon black. (Silver is not suitable for use in the catalyst layer 8 due to its low resistance to corrosion by the electrolyte material etc. For the same reason, silver is not suitable for use in any portion that may come into contact with the electrolyte material etc.) These materials also have conducting properties. It is preferable that the catalyst layer 8 be made of noble metal having catalytic activity and electrochemical stability. Especially preferred is platinum that has high catalytic activity and resistance to being dissolved by the electrolytic solution.

In the case of using any of the metals, conductive oxides and conductive resins showing no catalytic activity, the metals usable in the catalyst layer 8 are exemplified by aluminum, copper, chrome, nickel and tungsten and the conductive resins usable in the catalyst layer 8 are exemplified by polyaniline, polypyrrole and polyacethylene. The conductive resins are also exemplified by resin compositions prepared by mixing conductive materials into nonconductive resin materials. The resin materials are not particularly restricted and can be either a thermoplastic resin or a thermosetting resin. Examples of the thermoplastic resin include thermoplastic polyester resins, polyamide resins, polyolefin resins and polyvinyl chloride resins. Examples of the thermosetting resin include epoxy resins, thermosetting polyester resins and phenol resins. The conductive materials are not also particularly restricted. Examples of the conductive materials include carbon black, noble metals such as platinum, gold and rhodium, other metals such as copper, aluminum, nickel, chromium and tungsten and conductive polymers such as polyaniline, polypyrrole and polyacethylene. As the conductive materials, especially preferred are noble metal and carbon black each having conductive properties and catalytic activities. These conductive materials can be used solely or in combination thereof.

In the case of using any of the metals, conductive oxides and conductive resins showing no catalytic activity, it is desirable that the catalytically active material be contained in an amount of 1 to 99 parts by mass, especially 50 to 99 parts by mass, per 100 parts by mass of the catalytically inactive metal, conductive oxide and/or conductive resin material.

In this way, the catalyst layer 8 can be prepared from either the catalytically active and electrically conductive material or at least one of the metals, the conductive oxides and the conductive resins containing the catalytically active material. The catalyst layer 8 may be a layer of one kind of material or a mixed layer of two or more kinds of materials. Further, the catalyst layer 8 may have a single layer structure or a multilayer structure including more than one of metal layers, conductive oxide layers, conductive resin layers and mixed layers of two or more of metals, conductive oxides and conductive resins.

The thickness of the catalyst layer 8 is not particularly restricted and can be adjusted to 3 nm to 10 $\mu$m, especially 3 nm to 2 $\mu$m, in either of the cases where the catalyst layer 8 has a single layer structure and where the catalyst layer 8 has a multilayer structure. When the thickness of the catalyst layer 8 is in the range of 3 nm to 10 $\mu$m, the resistance of the catalyst layer 8 can be decreased to a sufficiently low degree.

In the case of the catalyst layer 8 being of the catalytically active material, the catalyst layer 8 can be prepared by applying an metallized ink containing fine particles of the catalytically active material to the surface of the substrate 7 or, if the conductive layer 22 is provided, to the surface of the conductive layer 22. In the case of the catalyst layer 8 being of any metal or conductive oxide containing the catalytically active material, the catalyst layer 8 can be prepared in the same manner as in the case of the catalyst layer 8 being of the catalytically active material. The ink application process is exemplified by various process techniques such as a screen printing process, a doctor blade process, a squeegee process and a spin coat process. Alternatively, the catalyst layer 8 may be prepared through the deposition of the metal or the like onto the surface of the substrate 7 by a sputtering process, a vapor deposition process, an ion plating process or the like. In the case of the catalyst layer 8 being of the conductive resin containing the catalytically active material, the catalyst layer 8 can be prepared by kneading the conductive resin with the catalytically active material in powdery or fibrous form through the use of a kneading device such as a Banbury mixer, an internal mixer or an open roll, molding the kneaded substance into a film, and then, bonding the film to the surface of the substrate 7 or the like.

The catalyst layer 8 may alternatively be prepared by dissolving or dispersing the resin composition into a solvent, applying the thus-obtained solution or dispersoid to the surface of the substrate 7 or the like, drying to remove the solvent, and then, heating as required. The catalyst layer 8, when being a mixed layer, is prepared by any of the above catalyst layer preparation methods according to the kinds of the material components thereof.

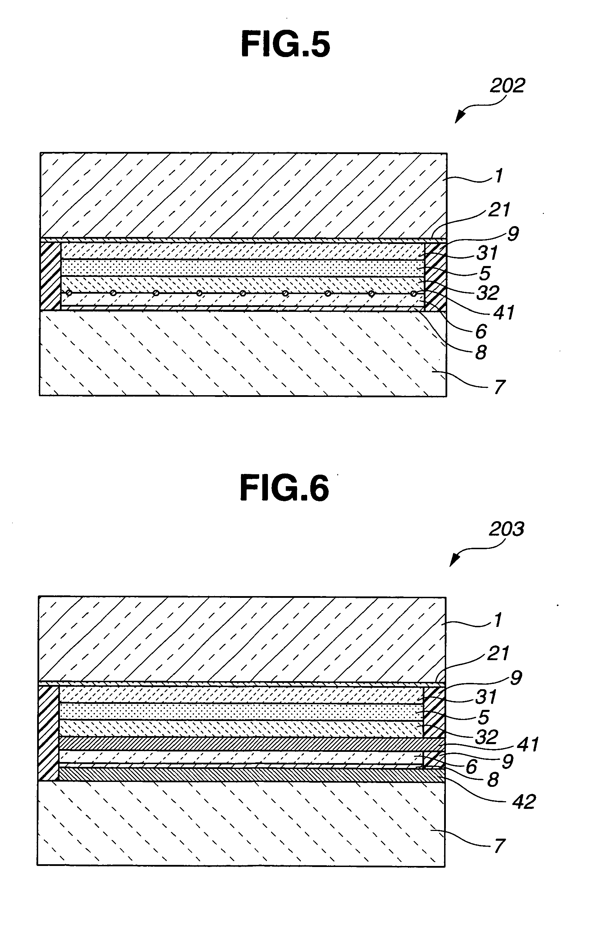

As shown in FIGS. 6, 7 and 9, there may be provided a second collector electrode 42 between the substrate 7 and the catalyst layer 8 or, if the conductive layer 22 is arranged between the substrate 7 and the catalyst layer 8, between the substrate 7 and the conductive layer 22 or on a surface of the conductive layer 22. There is no need to provide such a second collector electrode 42 when the catalyst layer 8 is made of noble metal e.g. platinum or gold having an excellent conducting property, in particular, with a thickness of 20 nm or larger, especially 1 $\mu$m or larger (normally 10 $\mu$m or smaller). It is however desirable that the second collector electrode 42 be provided in view of the cost. Although the catalyst layer 8 is preferably formed into a thin film due to the fact that platinum or the like is expensive, the thin-film layer 8 is high in resistance. It is thus possible to obtain an improvement in charge collection efficiency and a reduction in cost by providing the second collector electrode 42 of metal e.g. tungsten, titanium or nickel. When the catalyst layer 8 is prepared from the mixed composition of the catalytically active material and the conductive oxide material, the catalyst layer 8 becomes further high in resistance. In this case, it is thus desirable that the second collector electrode 42 be provided for improved charge collection efficiency.

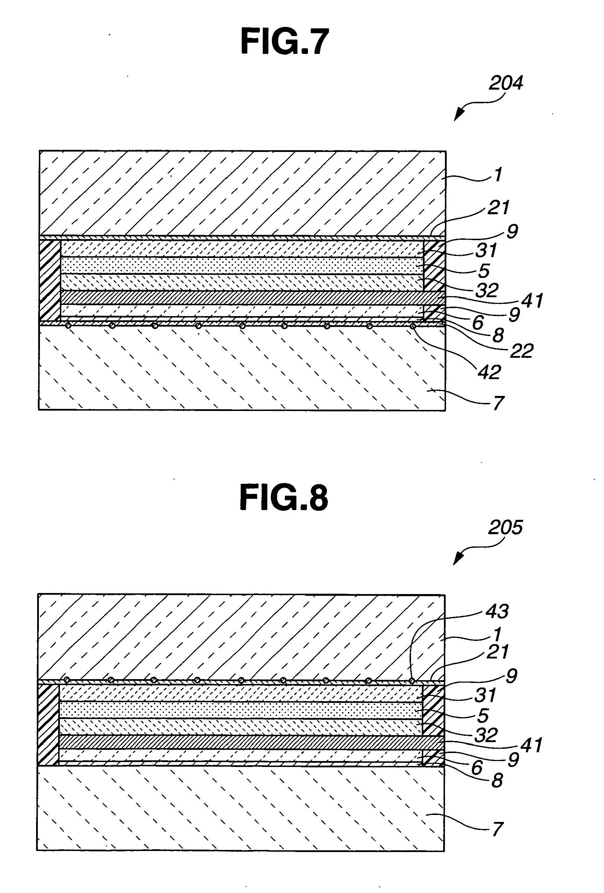

The form of the second collector electrode 42 is not also particularly restricted. The second collector electrode 42 can be provided in sheet form as shown in FIG. 6 since the light-transmitting property is not an essential condition for the second base member 102. In the case of the second collector electrode 42 being provided in sheet form, the second collector electrode 42 may or may not be made porous since there is no need for the electrolyte material to migrate through the second collector electrode 42. In order for the second collector electrode 42 to be low in resistance, it is desirable that the second collector electrode 42 be planarly similar in configuration to the catalyst layer 8 and have large an area as 50% or more, especially 65% or more, more especially 80% or more (including the same size), of the area of the catalyst layer 8. It is also desirable that the second collector electrode 42 be similar in figure to the catalyst layer 8. The second collector electrode 42 may alternatively be provided in the form of a linear electrode having a specific electrode pattern as shown in FIG. 7. The collector electrode pattern is not particularly restricted. Examples of the electrode pattern are a grid pattern 44 as shown in FIG. 13, a comb pattern 45 as shown in FIG. 14 and a radial pattern 46 as shown in FIG. 15. In the case where the second collector electrode 42 is of the linear electrode with such a specific pattern, the width and thickness of the linear electrode are not particularly restricted and can be selected in view of the electrical resistance, cost and the like. Further, the total area of the second collector electrode 42 is not particularly restricted in the case where the second collector electrode 42 is of the linear electrode formed in the specific pattern. The total area of the second collector electrode 42 is preferably controlled to 0.1 % or more, especially 5% or more, more especially 10% or more, of the total area of the catalyst layer 8. It is possible to obtain a further improvement in charge collection efficiency when the second collector electrode 42 has such a large area.

As shown in FIGS. 8 and 9, there may be provided a third collector electrode 43 between the light-transmitting substrate 1 and the light-transmitting conductive layer 21 or on a surface of the light-transmitting conductive layer 21. The form of the third collector electrode 43 is not particularly restricted as long as the third collector electrode 43 is capable of securing a light-transmitting property. The third collector electrode 43 can be provided in the form of a linear electrode having a specific electrode pattern, for example, a grid pattern 44 as shown in FIG. 13, a comb pattern 45 as shown in FIG. 14 or a radial pattern 46 as shown in FIG. 15. In the case where the third collector electrode 43 is of the linear electrode with such a the specific pattern, the width and thickness of the linear electrode are not particularly restricted and can be selected in view of the electrical resistance, cost and the like. Further, the total area of the third collector electrode 43 is preferably in a range of 0.1 to 20%, especially 0.1 to 5%, more especially 0.1 to 1%, relative to the total area of the first semiconductor electrode 31. When the total area of the third collector electrode 43 is in the range of 0.1 to 20% relative to the total area of the first semiconductor electrode 31, it is possible to obtain an improvement in charge collection efficiency and secure a sufficient amount of light irradiated onto the first semiconductor electrode 31.

The preparation method of the first, second and third collector electrodes 41, 42 and 43 is not particularly restricted. For example, the collector electrode 41, 42, 43 can be prepared by depositing metal e.g. tungsten, titanium or nickel by a physical vapor deposition process such as magnetron sputtering or electron-beam vapor deposition using a mask of predetermined pattern, and then, patterning the deposit by a photolithographic process or the like. Alternatively, the collector electrode 41, 42, 43 may be prepared by providing a pattern of metallized ink containing a metal component by a screen printing process or the like, and then, sintering the ink pattern. Examples of the metal suitably usable in vapor phase deposition include noble metal such as platinum and gold and copper in addition to tungsten, titanium and nickel. Among others, tungsten, nickel, titanium and noble metal having high corrosion resistance are preferred as the metal for use in vapor phase deposition. Examples of the metal mixable in the metallized ink include tungsten, titanium, nickel, noble metal such as platinum and gold and copper. As the metal for use in the metallized ink, tungsten, titanium, nickel and noble metal having high corrosion resistance are preferred. In the above-mentioned electrode preparation methods, the density of the collector electrode 41, 42, 43 can be adjusted according to the conditions of physical vapor deposition and sintering. The first collector electrode 41 in particular can be made porous with the above-specified porosity.

There is no need that the conductive layer 22 be provided when the second collector electrode 42 has sufficiently high charge collection efficiency. It is however desirable that the conductive layer 22 be provided between the substrate 7 and the catalyst layer 8 in the second base member 102 for an improvement in charge collection efficiency when the charge collection efficiency of the second collector electrode 42 is not sufficient.

The conductive layer 22 may or may not have a light-transmitting property. Further, the conductive layer 22 can be made of the same material as that of the light-transmitting conductive layer 21.

The thickness of the conductive layer 22 is not particularly restricted due to the fact that the light-transmitting property is not an essential condition for the conductive layer 22. In view of the cost, however, the conductive layer 22 is preferably formed into a thin film. The conductive layer 22, when formed into a thin film, attains a light-transmitting property but becomes high in internal resistance. It is thus desirable to adjust the thickness of the conductive layer 22 in consideration of the light-transmitting property and internal resistance. Normally, the conductive layer 22 of such a thickness that the layer 22 shows a surface resistivity of 100 $\Omega/cm^2$ or lower, especially 1 to 10 $\Omega/cm^2$.

The preparation method of the conductive layer 22 is not particularly restricted. The conductive layer 22 can be prepared, for example, through the application of a paste containing fine particles of metal, conductive oxide or the like to the surface of the substrate 7. The paste application process is exemplified by various process techniques such as a doctor blade process, a squeegee process and a spin coat process. Alternatively, the conductive layer 22 may be prepared through the deposition of metal or the like onto the surface of the substrate 7 by a sputtering, vapor deposition, ion plating process or the like.

The manufacturing method of the dye-sensitized solar cells 201 to 206 is not particularly restricted. The dye-sensitized solar cells 201 to 206 can be manufactured by the following method. Prepared are a laminate in which the light-transmitting substrate 1, the light-transmitting conductive layer 21 and the first semiconductor electrode 31 are laminated together in order of mention, if the third collector electrode 43 is provided, with the third collector electrode 43 being laid between the light-transmitting substrate 1 and the light-transmitting conductive layer 21 or on the surface of the light-transmitting conductive layer 21 as well as a laminate in which the substrate 7, the catalyst layer 8, the porous insulating layer 6, the first collector electrode 41 and the second semiconductor electrode 32, if the second collector electrode 42 and/or the conductive layer 22 is provided, with the second collector electrode 42 and/or the conductive layer 22 being laid between the substrate 7 and the catalyst layer 8. These laminates are then put together in such a manner that the first and second semiconductor electrodes 31 and 32 face each other, thereby completing the dye-sensitized solar cells 201 to 206.

As described above, each of the dye-sensitized solar cells 201 to 206 has two semiconductor electrodes 31 and 32 to achieve highly efficient utilization of the irradiation light for improved photoelectric conversion efficiency. The light utilization efficiency can be further increased in the case where the light absorption wavelength range of the sensitizing dye 311 of the first semiconductor electrode 31 is different from the light absorption wavelength range of the sensitizing dye 321 of the second semiconductor electrode 32. It is possible to allow a larger amount of light to pass through the first semiconductor electrode 31 on the light incident side so as to obtain a further improvement in light utilization efficiency especially when the light absorption wavelength range of the sensitizing dye 311 is on a shorter wavelength side of the light absorption wavelength range of the sensitizing dye 321. The wavelength range of light absorbed by the sensitizing dyes 311 and 321 can be widened to show a particularly large improvement in light utilization efficiency in the case where at least one of the sensitizing dyes 311 and 321 is composed of two or more different kinds of sensitizing dye compounds having different light absorption wavelength ranges.

It is also possible to allow a larger amount of light to pass through the first semiconductor electrode 31 so as to obtain a further improvement in light utilization efficiency in the case where each of the electrode bodies of the first and second semiconductor electrodes 31 and 32 is in particle agglomerate form and the average particle size of the electrode body of the first semiconductor electrode 31 is smaller than that of the second semiconductor electrode 32.

The second semiconductor electrode 32, when being provided in linear form with a specific electrode pattern, allows the electrolyte material and the like to migrate therethrough toward the catalyst layer 8 adequately.

The first collector electrode 41, when being provided in porous form, allows the electrolyte material and the like to migrate therethrough toward the catalyst layer 8 adequately. The first collector electrode 41, when being provided in linear form with a specific electrode pattern, not only provides an improvement in charge collection efficiency but also allows the electrolyte material and the like to migrate therethrough toward the catalyst layer 8.

In the case where the second collector electrode 42 is arranged between the substrate 7 and the catalyst layer 8, it is possible to obtain a further improvement in photoelectric conversion efficiency.

In the case where the third collector electrode 43 is arranged between the light-transmitting substrate 1 and the light-transmitting conductive layer 21 or on the surface of the light-transmitting conductive layer 21, the charge collection efficiency of the first semiconductor electrode 31 becomes increased to provide an improvement in photoelectric conversion efficiency. The third collector electrode 43, when a linear form in a specific electrode pattern, allows a sufficient amount of light to pass therethrough toward the semiconductor electrode 31.

The substrate 7, when being made of ceramic, functions as a supporting substrate so that each of the dye-sensitized solar cells 201 to 206 can attain excellent durability.

EXAMPLES

The present invention will be described in more detail with reference to the following examples of the dye-sensitized solar cells 205 and 206. It should be however noted that the following examples are only illustrative and not intended to limit the invention thereto.

Example 1

(1) Production of First Laminated Member

A glass substrate having a length of 100 mm, a width of 100 mm and a thickness of 1 mm was prepared as a light-transmitting substrate 1. A third collector electrode 43 was formed of tungsten in a grid pattern with a width of 1 mm, a pitch of 10 mm and a thickness of 1 $\mu$m on a surface of the substrate 1 by a RF sputtering process. After that, a light-transmitting conductive layer 21 of fluorine-doped tin oxide was formed with a thickness of 500 nm by a RF sputtering process on the surface of the substrate 1 to which the third collector electrode 43 had been applied. An electrode layer (as an electrode body) having a length of 90 mm, a width of 90 mm and a thickness of 20 $\mu$m were then formed by applying a paste containing titania particles of 10 to 20 nm in diameter (available under the trade name of "Ti-Nonoxide D/SP" from Solaronix) to a surface of the light-transmitting conductive layer 21 by a screen printing process, drying at 120°C for 1 hour and sintering at 480°C for 30 minutes. The thus-obtained laminate was immersed in an ethanol solution of ruthenium complex (available under the trade name of "535bis-TBA" from Solaronix) for 10 hours so as to impregnate the sintered titanium particles with the ruthenium complex as a sensitizing dye 31 having a light absorption wavelength range of 400 to 600 nm, as partly enlarged in FIG. 3, and thereby complete a first semiconductor electrode 31. In this way, the first laminated member was produced.

(2) Production of Second Laminated Member

Next, a slurry was prepared by mixing 100 parts by mass of an aluminum powder of 99.9 mass% purity with 5 parts by mass of a mixed powder of magnesia, calcia and silica as a sintering aid, 2 parts by mass of a binder and a solvent. Using this slurry, an alumina green sheet having a thickness of 2 mm was produced by a doctor blade process. A conductive coating film for a catalyst layer 8 having a thickness of 500 nm was formed of a platinum-containing metalized ink on a surface of the alumina green sheet by a screen printing process. Subsequently, an insulating coating film for a porous insulating layer 6 having a thickness of 6 $\mu$m was formed of the same slurry as above except for further containing carbon as a pore forming agent on a surface of the above-applied conductive coating film. A conductive coating film for a first collector electrode 41 having a thickness of 5 $\mu$m was then formed of the same metalized ink as above except for further containing an alumina powder as a pore forming agent on a surface of the insulating coating film. The thus-obtained laminate was integrally sintered at 1500°C in a reducing atmosphere, thereby providing the catalyst layer 8 of 90 mm in length, 90 mm in width and 500 nm in thickness, the porous insulating layer 6 of 90 mm in length, 90 mm in width and 5 $\mu$m in thickness and the first collector electrode 41 (exclusive of a terminal portion for current output) of 90 mm in length, 90 mm in width and 5 $\mu$m in thickness, in order of mention, on the surface of the alumina substrate 7 of 1 mm in thickness. After that, a titania electrode layer (electrode body) having a length of 90 mm, a width of 90 mm and a thickness of 20 $\mu$m was formed by applying the same titania-particle-containing slurry as above to a surface of the first collector electrode 41 by a screen printing process and drying and sintering in the same manner as above. The laminate was then immersed into a solution, in which an organic dye having a light absorption wavelength range of 500 to 700 nm had been contained as a sensitizing dye 321, for 10 hours so as to form a second semiconductor electrode 32 by adhering the sensitizing dye 321 to the sintered titania particles. The second laminated member was completed in this way.

(3) Manufacturing of Dye-sensitized Solar Cell 205

A thermoplastic adhesive sheet having a thickness of 60 $\mu$m (available under the trade name of "SX1170-60" from Solaronix) was provided on a surface of the alumina substrate 7 of the second laminated member on which the catalyst layer 8 had not been formed. The first laminated member was subsequently arranged on the second laminated member in such a manner that the first semiconductor electrode 31 of the first laminated member faces the second semiconductor electrode 32 of the second laminated member. The thus-obtained laminate was placed on a hot plate whose temperature had been adjusted to 100°C, with the alumina substrate 7 being directed downward, and heated for 5 minutes to form a joint 9 between the light-transmitting substrate 21 of the first laminated member and the alumina substrate 7 of the second laminated member. After that, an electrolyte layer 5 was formed between the first semiconductor electrode 31 and the second semiconductor electrode 32 by injecting an iodine electrolytic solution (available under the trade name of "Iodolyte PN-50" from Solaronix) through an electrolyte solution injection hole in a predetermined position of the first laminated member. Herein, the injected iodine electrolytic solution was incorporated into the first collector electrode 41 and the porous insulating layer 6 and migrated to reach the surface of the catalyst layer 8. After that, the injection holes were sealed with the same adhesive as above. Solar cell power was taken from each of the third collector electrode 43, the first collector electrode 43 and the catalyst layer 8.

(4) Performance Evaluation of Dye-sensitized Solar Cell 205

Artificial sunlight was irradiated onto the dye-sensitized solar cell 205 produced by the above procedures (1) to (3) with an intensity of 100 mW/cm$^2$ by means of a solar simulator whose spectrum had been adjusted to AM 1.5. The dye-sensitized solar cell 205 characteristically showed a conversion efficiency of 10.5%.

Example 2

A dye-sensitized solar cell 206 was manufactured in the same manner as in Example 1 except that a second collector electrode 42 of tungsten in sheet form was made by a sputtering process with a thickness of 1 $\mu$m on a surface of the ceramic substrate 7 and that the catalyst layer 8 was provided on a surface of the second collector electrode 42. Solar cell power was taken from each of the third collector electrode 43, the first collector electrode 41 and the second collector electrode 42. The performance of the thus-obtained dye-sensitized solar cell 206 was evaluated in the same manner as in Example 1. The dye-sensitized solar cell 206 of Example 2 characteristically showed a conversion efficiency of 10.8%. It is thus clear that the photoelectric conversion efficiency is further improved by the arrangement of the collector electrode 42 on the side of the catalyst layer 8.

Comparative Example 1

A dye-sensitized solar cell was manufactured in the same manner as in Example 1 except for not being provided with a first collector electrode 41. The performance of the thus-obtained dye-sensitized solar cell was evaluated in the same manner as in Example 1. The dye-sensitized solar cell of Comparative Example 1 characteristically showed a conversion efficiency of 6.2%. It is thus clear that the dye-sensitized solar cell of Comparative Example 1 was lower in performance than those of Examples 1 and 2.

Comparative Example 2

A dye-sensitized solar cell was manufactured in the same manner as in Example 1 except for not being provided with a conductive layer 21, a semiconductor electrode 31 and a collector electrode 43. The performance of the thus-obtained dye-sensitized solar cell was evaluated in the same manner as in Example 1. The dye-sensitized solar cell of Comparative Example 2 characteristically showed a conversion efficiency of 6.8%. It is thus clear that the dye-sensitized solar cell of Comparative Example 2 was lower in performance than those of Examples 1 and 2.

Although the present invention has been described with reference to the specific embodiments of the invention, the invention is not limited to the above-described embodiments. Various modification and variation of the embodiments described above will occur to those skilled in the art in light of the above teaching.

**Claims**

1.   A dye-sensitized solar cell, comprising:

a first base member including a first substrate having a light-transmitting property, a light-transmitting conductive layer formed on a surface of the first substrate, a first semiconductor electrode containing a sensitizing dye and arranged on a surface of the light-transmitting conductive layer, a second semiconductor electrode containing a sensitizing dye and arranged with a first surface thereof facing the first semiconductor electrode, a first collector electrode formed on a second surface of the second semiconductor electrode and an electrolyte layer arranged between the first and second semiconductor electrodes;
a porous insulating layer arranged in contact with the second semiconductor electrode and the first collector electrode or in contact with the first collector electrode; and
a second base member including a second substrate and a catalyst layer formed on a surface of the second substrate and facing the porous insulating layer.

2. The dye-sensitized solar cell according to claim 1, wherein the sensitizing dyes of the first and second semiconductor electrodes have different light absorption wavelength ranges.

3. The dye-sensitized solar cell according to claim 2, wherein the light absorption wavelength range of the sensitizing dye of the first semiconductor electrode is on a shorter wavelength side of the light absorption wavelength range of the sensitizing dye of the second semiconductor electrode.

4. The dye-sensitized solar cell according to any one of claims 1 to 3, wherein at least one of the sensitizing dyes of the first and second semiconductor electrodes is composed of two or more different kinds of sensitizing dye compounds having different light absorption wavelength ranges.

5. The dye-sensitized solar cell according to any one of claims 1 to 4, wherein each of bodies of the first and second semiconductor electrodes is in the form of a particle agglomerate and the average particle diameter of the first semiconductor electrode is smaller than the average particle diameter of the second semiconductor electrode.

6. The dye-sensitized solar cell according to any one of claims 1 to 5, wherein the second semiconductor electrode is in the form of a linear electrode having a specific electrode pattern.

7. The dye-sensitized solar cell according to any one of claims 1 to 6, wherein the first collector electrode is in the form of a porous layer.

8. The dye-sensitized solar cell according to any one of claims 1 to 6, wherein the first collector electrode is in the form of a linear electrode having a specific electrode pattern.

9. The dye-sensitized solar cell according to any one of claims 1 to 8, further comprising a second collector electrode between the second substrate and the catalyst layer.

10. The dye-sensitized solar cell according to any one of claims 1 to 9, further comprising a third collector electrode between the first substrate and the light-transmitting conductive layer or on a surface of the light-transmitting conductive layer.

11. The dye-sensitized solar cell according to claim 10, wherein the third collector electrode is in the form of a linear electrode having a specific electrode pattern.

12. The dye-sensitized solar cell according to one of claims 1 to 11, wherein the second substrate is made of ceramic.

# FIG.1

# FIG.2

LIGHT ABSORPTION AMOUNT

SENSITIZING DYE 311
IN FIRST SEMICONDUCTOR
ELECTRODE 31

SENSITIZING DYE 321
IN SECOND SEMICONDUCTOR
ELECTRODE 32

400    600    800

LIGHT WAVELENGTH (nm)

# FIG.3

21

311

31

5

# FIG.4

5

321

32

41

# FIG.5

# FIG.6

EP 1 689 018 A1

# FIG.7

# FIG.8

17

# FIG.9

# FIG.10

# FIG.11

34

# FIG.12

35

# FIG.13

E

44

# FIG.14

# FIG.15

## INTERNATIONAL SEARCH REPORT

International application No.

PCT/JP2004/016317

**A. CLASSIFICATION OF SUBJECT MATTER**
Int.Cl⁷ H01M14/00, H01L31/04

According to International Patent Classification (IPC) or to both national classification and IPC

**B. FIELDS SEARCHED**

Minimum documentation searched (classification system followed by classification symbols)
Int.Cl⁷ H01M14/00, H01L31/04

Documentation searched other than minimum documentation to the extent that such documents are included in the fields searched
| | | | |
|---|---|---|---|
| Jitsuyo Shinan Koho | 1926–1996 | Toroku Jitsuyo Shinan Koho | 1994–2004 |
| Kokai Jitsuyo Shinan Koho | 1971–2004 | Jitsuyo Shinan Toroku Koho | 1996–2004 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2002-75479 A (Hiroshi KOMIYAMA), 15 March, 2002 (15.03.02), Claims 1 to 5; examples (Family: none) | 1-12 |
| Y | JP 2002-367686 A (Aisin Seiki Co., Ltd.), 20 December, 2002 (20.12.02), Claims 1 to 14; examples (Family: none) | 1-12 |
| Y | JP 2002-313443 A (Aisin Seiki Co., Ltd.), 25 October, 2002 (25.10.02), Claims 1 to 5; examples (Family: none) | 1-12 |

| ☒ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 04 January, 2005 (04.01.05) | 25 January, 2005 (25.01.05) |

| Name and mailing address of the ISA/ | Authorized officer |
|---|---|
| Japanese Patent Office | |
| Facsimile No. | Telephone No. |

Form PCT/ISA/210 (second sheet) (January 2004)

**INTERNATIONAL SEARCH REPORT**

International application No.

PCT/JP2004/016317

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2002-170602 A (Hitachi Maxell, Ltd.), 14 June, 2002 (14.06.02), Claims 1 to 15; examples (Family: none) | 1-12 |
| Y | JP 2001-345125 A (Hitachi Maxell, Ltd.), 14 December, 2001 (14.12.01), Claims 1 to 26; examples (Family: none) | 1-12 |
| Y | JP 2002-222971 A (Sharp Corp.), 09 August, 2002 (09.08.02), Claims 1 to 6 & US 2002/134426 A1 | 2,3 |
| Y | JP 2000-243466 A (Aisin Seiki Co., Ltd.), 08 September, 2000 (08.09.00), Claims 1 to 6 (Family: none) | 2,3 |
| Y | JP 2003-249274 A (Sharp Corp.), 05 September, 2003 (05.09.03), Claims 1 to 8; examples; drawings (Family: none) | 2-4 |
| Y | JP 10-255863 A (Central Research Institute of Electric Power Industry), 25 September, 1998 (25.09.98), Claims 1 to 14; examples; drawings (Family: none) | 5 |
| Y | JP 2001-93591 A (Toshiba Corp.), 06 April, 2001 (06.04.01), Claims 1, 2; examples; drawings (Family: none) | 5 |
| Y | JP 2002-352868 A (Toyota Central Research And Development Laboratories, Inc.), 06 December, 2002 (06.12.02), Claims 1 to 6; examples; drawings (Family: none) | 5 |
| Y | JP 2000-243465 A (Aisin Seiki Co., Ltd.), 08 September, 2000 (08.09.00), Claims 1, 2; examples; drawings (Family: none) | 6,8-11 |
| Y | JP 2001-283945 A (TDK Corp.), 12 October, 2001 (12.10.01), Claims 1 to 16; examples; drawings (Family: none) | 6,8-11 |

Form PCT/ISA/210 (continuation of second sheet) (January 2004)

**INTERNATIONAL SEARCH REPORT**

International application No.

PCT/JP2004/016317

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2002-94096 A (Canon Inc.),<br>29 March, 2002 (29.03.02),<br>Claims 1 to 9; examples; drawings<br>(Family: none) | 6,8-11 |
| Y | JP 2001-283941 A (Hitachi Maxell, Ltd.),<br>12 October, 2001 (12.10.01),<br>Claims 1 to 6; examples; drawings<br>(Family: none) | 6,8-11 |

Form PCT/ISA/210 (continuation of second sheet) (January 2004)